# EUROPÄISCHE PATENTSCHRIFT

(11) **EP 2 721 670 B1**
(45) Veröffentlichungstag und Bekanntmachung des Hinweises auf die Patenterteilung: **20.05.2015**
(21) Anmeldenummer: 12755998.7
(22) Anmeldetag: 03.09.2012
(51) Int. Cl.: H01M 4/131, H01M 4/1391, H01M 4/38, H01M 4/52, H01M 4/80, H01M 10/39, H01M 4/02

(54) **SPEICHERELEMENT UND VERFAHREN ZU DESSEN HERSTELLUNG**
STORAGE ELEMENT AND METHOD FOR THE PRODUCTION THEREOF
ÉLÉMENT ACCUMULATEUR ET PROCÉDÉ POUR SA FABRICATION

(30) Priorität: 27.09.2011 DE 102011083537
(43) Veröffentlichungstag der Anmeldung: 23.04.2014
(73) Patentinhaber: Siemens Aktiengesellschaft, 80333 München (DE)
(72) Erfinder: SCHUH, Carsten, 85598 Baldham (DE); SOLLER, Thomas, 94405 Landau/Isar (DE)
(86) Internationale Anmeldenummer: PCT/EP2012/067106
(87) Internationale Veröffentlichungsnummer: WO 2013/045208

(56) Entgegenhaltungen:
- EP-A1- 1 513 214
- EP-A1- 2 335 807
- WO-A2-98/19351
- DE-A1- 4 129 553
- US-A1- 2006 204 830

## Beschreibung

Die Erfindung betrifft ein Speicherelement für eine Festelektrolyt-Batterie nach dem Oberbegriff von Patentanspruch 1 sowie ein Verfahren zum Herstellen eines solchen Speicherelements nach dem Oberbegriff von Patentanspruch 10.

Festelektrolyt-Batterien beruhen auf dem Prinzip der Festelektrolyt-Brennstoffzelle, die für die Verwendung als Batterie um zusätzliche keramische Speicherkörper ergänzt wird. In eine keramische Matrix dieser Speicherkörper sind Metall- bzw. Metalloxidpartikel eingelagert. Zur Energieentnahme aus dieser Batterie werden die Metallpartikel elektrochemisch mit Sauerstoff zu den entsprechenden Oxiden umgesetzt, wobei die freiwerdende Energie als elektrische Energie an den Abgriffspolen der Batterie entnommen werden kann. Zum Wiederaufladen einer solchen Batterie werden die zu einer Festoxid-Brennstoffzelle äquivalenten Bestandteile der Batterie im Elektrolysemodus betrieben, so dass durch die zugeführte elektrische Energie Wasserstoff gebildet wird, der die Metalloxide wieder zu den entsprechenden Metallen reduzieren kann.

Von besonderer Bedeutung für die Kapazität sowie die Lade- und Entladecharakteristik einer derartigen Batterie sind die Zugänglichkeit der eingelagerten Metall- bzw. Metalloxidpartikel sowie deren aktive Oberfläche. Üblicherweise werden heutzutage im Wesentlichen sphärische bzw. ellipsoide Metallpartikel mit einer medianen Korngröße d50 von weniger als 10 µm verwendet. Derartige Partikel besitzen jedoch eine hohe Reaktivität und neigen daher bei den hohen Betriebstemperaturen einer Festelektrolyt-Batterie zu schneller wechselseitiger Versinterung. Durch diese Versinterung geht ein Großteil der aktiven Oberfläche der Partikel verloren, so dass die Speicherelemente einer derart aufgebauten Batterie eine schnelle Alterung zeigen.

Die EP 1 513 214 A1 offenbart derartige Partikel gemäß dem Stand der Technik.

Der vorliegenden Erfindung liegt somit die Aufgabe zugrunde, ein Speicherelement nach dem Oberbegriff von Patentanspruch 1 anzugeben, welches eine besonders hohe Speicherkapazität, gute Entladungscharakteristik und gleichzeitig eine Langzeitstabilität sowohl im Lade-Entlade-Zyklus als auch im Standby Betrieb aufweist. Der Erfindung liegt ferner die Aufgabe zugrunde, ein Verfahren nach dem Oberbegriff von Patentanspruch 10 bereit zu stellen, welches die Herstellung eines solchen Speicherelements ermöglicht.

Diese Aufgabe wird durch ein Speicherelement mit den Merkmalen des Patentanspruchs 1 sowie durch ein Verfahren mit den Merkmalen des Patentanspruchs 10 gelöst.

Ein derartiges Speicherelement für eine Festelektrolyt-Batterie weist einen Grundkörper aus einer porösen keramischen Matrix auf, in welche Partikel aus einem Metall und/oder einem Metalloxid, welche zusammen ein Redoxpaar bilden, eingelagert sind. Erfindungsgemäß ist dabei vorgesehen, dass die Partikel plättchenförmig ausgebildet sind. Im Gegensatz zur aus dem Stand der Technik bekannten sphärischen oder ellipsoiden Form der Partikel weisen plättchenförmige Metall- oder Metalloxidpartikel ein besonders günstiges Oberflächen-Volumen-Verhältnis auf. Hierdurch lassen sich besonders hohe Packungsdichten und daher besonders hohe Speicherkapazitäten realisieren. Speicherelemente mit plättchenförmigen Metall- oder Metalloxidpartikeln zeichnen sich ferner durch eine besonders geringe erforderliche intergranulare Eindringtiefe für die Redox-Reaktion im Vergleich zu volumengleichen sphärischen Partikeln aus, was die Reaktionskinetik beim Lade- und Entladevorgang einer Batterie mit einem derartigen Speicherelement deutlich verbessert. Die abgeflachte Partikelform erleichtert zudem die wechselseitige Separation der einzelnen Metall- bzw. Metalloxidpartikel, was die gegenseitige Versinterung dieser Partikel im Betrieb reduziert. Dies verbessert sowohl die nutzbare Kapazität des Speicherelements als auch dessen Langzeitstabilität.

Vorzugsweise weisen die Partikel ein Aspektverhältnis - also ein Verhältnis zu den Längen ihrer langen und kurzen Hauptachse - von mehr als 10 auf, so dass ein besonders gutes Verhältnis von Volumen zu Oberfläche erzielt werden kann.

Die mediane Korngröße d50 der verwendeten Partikel aus dem Metall und/oder dem Metalloxid beträgt vorzugsweise 10-20 µm. Die Korngröße d90, also die Größe die von 90% der Partikel nicht überschritten wird, beträgt dabei vorzugsweise weniger als 60 µm.

Es ist ferner zweckmäßig, wenn die Partikel bezüglich einer Vorzugsrichtung ausgerichtet sind, um eine besonders dichte Packung und geringe Sinterneigung zu erzielen. In weiterer Ausgestaltung der Erfindung sind die Partikel aus Eisen und/oder einem Eisenoxid, insbesondere Eisenglimmer, ausgebildet. Insbesondere die Verwendung von Eisenglimmer ist vorteilhaft, da dieser aufgrund seiner Kristallstruktur ohne aufwändige Bearbeitung in die gewünschte plättchenförmige Gestalt zu bringen ist.

Die Matrix des Speicherelements selbst besteht vorzugsweise aus gesinterten Keramikpartikeln, die zweckmäßigerweise eine mediane Korngröße d50 von weniger als 1 µm aufweisen. Da die Keramikpartikel wesentlich kleiner ausgebildet sind als die Metallpartikel, werden die Metallpartikel großflächig von den Keramikpartikeln überzogen, so dass es kaum zu Kontakten zwischen den Metallpartikeln selbst kommt, die später zu einer Versinterung führen könnten. Gleichzeitig bleibt die Oberfläche der Metallpartikel jedoch im Wesentlichen zugänglich, so dass kaum reaktive Oberfläche verloren geht.

Vorzugsweise bestehen die Keramikpartikel aus einem Redoxinerten Material, insbesondere aus Al₂O₃, MgO oder ZrO₂. Selbstverständlich können auch andere oxidische Keramiken oder auch Keramiken auf Carbid- oder Nitrid-Basis Anwendung finden, sofern sie unter den elektrochemischen Bedingungen in einer Festelektrolyt-Batterie nicht zu Redox-Reaktionen neigen.

Die Erfindung betrifft ferner ein Verfahren zum Herstellen eines Speicherelements für eine Festelektrolyt-Batterie, bei welchem ein Schlicker aus Keramikpartikeln und Partikeln aus einem Metall und/oder einem Metalloxid, welche zusammen ein Redoxpaar bilden, bereitgestellt und zu einem Grünkörper geformt wird, welcher anschließend gesintert wird. Erfindungsgemäß ist dabei vorgesehen, dass plättchenförmige Partikel aus Metall und/oder Metalloxid verwendet werden. Wie bereits anhand des erfindungsgemäßen Speicherelements geschildert, bedingen derartige plättchenförmige Partikel eine geringere erforderliche intragranulare Eindringtiefe für die Redox-Reaktion als volumengleiche sphärische oder ellipsoide Partikel, wodurch die Reaktionskinetik im Vergleich zu konventionellen Speicherelementen nennenswert verbessert wird. Gleichzeitig kann durch diese Partikelform die wechselseitige Separation der einzelnen Metall-/Metalloxidpartikel wesentlich einfacher sichergestellt werden, so dass die Versinterungsneigung ab- und die Langzeitstabilität zunimmt. Ferner wird ein günstigeres Oberflächenvolumenverhältnis erzielt, als bei sphärischen Partikeln, woraus wiederum eine höhere erzielbare Packungsdichte von Metallpartikeln im Speicherkörper resultiert. Das erfindungsgemäße Verfahren ermöglicht darüber hinaus eine großserienfähige, reproduzierbare, flexible und kostengünstige Herstellung von Speicherelementen.

In einer bevorzugten Ausführungsform wird der Grünkörper durch Extrusion oder Pressen geformt. Dies ermöglicht eine besonders einfache und schnelle Herstellung des Grünkörpers.

Alternativ hierzu kann zum Formen des Grünkörpers zunächst durch Foliengießen eine Grünfolie auf einem Träger hergestellt werden. Anschließend wird der Träger von der Grünfolie abgezogen und eine Mehrzahl von Grünfolienabschnitten zum Grünkörper gestapelt, anschließend laminiert und entbindert. Der schichtweise Aufbau des Grünkörpers aus einzelnen Folienabschnitten ermöglicht den Aufbau von weiter texturierten Strukturen, beispielsweise indem für einzelne Grünfolienabschnitte unterschiedliche Schlickerzusammensetzungen verwendet werden. Auf diese Art können beispielsweise Gradienten von Porengröße, Porendichte, Korngröße, oder chemischer Zusammensetzung des Grünkörpers und damit des resultierenden Speicherelements erzielt werden.

Vorzugsweise werden als Partikel aus dem Metall und/oder Metalloxid Eisenglimmerpartikel mit einer medianen Korngröße d50 von 10-20 µm und einer Korngröße d90 von weniger als 60 µm sowie einem Aspektverhältnis von mehr als 10 verwendet, da auf diese Art ein besonders gutes Verhältnis von Gesamtvolumen des Speicherkörpers zu aktiver Oberfläche bei gleichzeitig hoher Langzeitstabilität erzielt werden kann. Als Keramikpartikel werden vorzugsweise Partikel aus Al₂O₃, MgO oder ZrO₂ mit einer medianen Korngröße d50 von weniger als einem µm verwendet. Da die Keramikpartikel deutlich kleiner sind als die Metall- bzw. Metalloxidpartikel, werden die Metalloxidpartikel durch die Keramik stabilisiert und von gegenseitigen Kontakten abgehalten, so dass sie untereinander kaum versintert werden können. Gleichzeitig sind die Keramikpartikel jedoch klein genug, dass sie die aktive Oberfläche der Metall- bzw. Metalloxidpartikel nicht wesentlich einschränken.

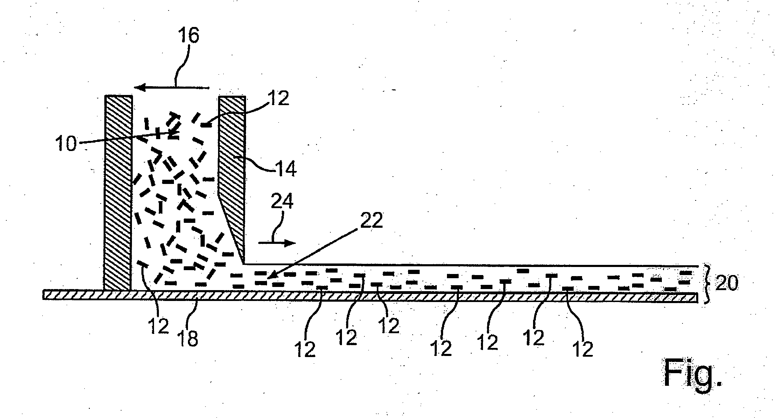

Im Folgenden werden die Erfindung und ihre Ausführungsformen anhand der Zeichnung näher erläutert. Die einzige Figur zeigt hierbei eine schematische Darstellung des Foliengussschritts bei der Herstellung eines Ausführungsbeispiels eines erfindungsgemäßen Speicherelements mittels eines Ausführungsbeispiels eines erfindungsgemäßen Verfahrens.

Zum Herstellen eines Speicherelements für eine Festelektrolyt-Batterie wird zunächst ein Schlicker 10 aus Keramikpartikeln, beispielsweise Aluminiumoxid, Magnesiumoxid oder Zirkonoxid zu einem Anteil von plättchenförmigen Eisenglimmerpartikeln 12 bereitgestellt. Die Korngröße d50 der Keramikpartikel beträgt dabei vorzugsweise in etwa ein µm, die mediane Korngröße d50 der Eisenglimmerpartikel 12 10-20 µm. Aufgrund seiner Kristallstruktur ist Eisenglimmer besonders einfach in Form von plättchenförmigen Partikeln bereitzustellen. Diese weisen ein besonders günstiges Verhältnis zwischen Oberfläche und Volumen auf, so dass sich ein Speicherkörper mit besonders hoher aktiver Metalloberfläche realisieren lässt.

Mittels einer Foliengussaparatur 14, die in Richtung des Pfeiles 16 über eine Trägerfolie 18 bewegt wird, wird aus dem Schlicker zunächst eine Grünfolie 20 hergestellt. Der Schlicker tritt dabei durch einen Austrittsspalt 22 der Foliengussapparatur 14 auf die Folienoberfläche auf. Durch die Relativbewegung zwischen Foliengussapparatur 14 und Trägerfolie 18 kommt es in dem entstehenden Schlickerfilm auf der Folienoberfläche zu Schwerkräften in Richtung des Pfeiles 24. Durch diese Scherung werden die Eisenglimmerpartikel 12 in einer Vorzugsrichtung ausgerichtet.

Nach dem Foliengießen kann die Grünfolie 20 vom Träger 18 gelöst und in entsprechende Abschnitte aufgeteilt werden. Die Grünfolienabschnitte werden anschließend zu einem der Form des zu bildenden Speicherelements entsprechenden Grünkörper aufgestapelt, bis die gewünschte Höhe erreicht ist. Dieser Folienstapel wird anschließend laminiert und entbindert und in der Folge gesintert.

Hierbei sintern insbesondere die Keramikpartikel des Schlickers 10 zusammen und separieren dabei die Eisenglimmerpartikel 12. Gleichzeitig verbleiben jedoch hinreichend viele Poren in der Keramikmatrix des Speicherelements, so dass nahezu die gesamte Oberfläche der eingelagerten plättchenförmigen Eisenglimmerpartikel 12 für Reaktionsgase zugänglich ist. Insgesamt wird so ein Speicherelement für eine Festelektrolyt-Batterie geschaffen, welches eine besonders hohe aktive Oberfläche aufweist, und daher besonders gute Lade- und Entladekinetiken besitzt. Aufgrund der plättchenförmigen Gestalt der Eisenglimmerpartikel 12 sind diese in der Matrix voneinander separiert und neigen daher beim Betrieb einer Festelektrolyt-Batterie mit einem derartigen Speicherelement nicht zum zusammensintern. Sowohl die Langzeitstabilität als auch die Speicherkapazität eines auf diese Weise hergestellten Speicherelements ist daher besonders gut.

## Patentansprüche

1. Speicherelement für eine Festelektrolyt-Batterie, mit einem Grundkörper aus einer porösen keramischen Matrix, in welche Partikel (12) aus einem Metall und/oder einem Metalloxid, welche zusammen ein Redoxpaar bilden, eingelagert sind, **dadurch gekennzeichnet, dass** die Partikel (12) plättchenförmig ausgebildet sind.

2. Speicherelement nach Anspruch 1, **dadurch gekennzeichnet, dass** die Partikel (12) ein Aspektverhältnis von mehr als 10 aufweisen.

3. Speicherelement nach Anspruch 1 oder 2, **dadurch gekennzeichnet, dass** die Partikel (12) eine mediane Korngröße d50 von 10-20 µm aufweisen.

4. Speicherelement nach einem der Ansprüche 1 bis 3, **dadurch gekennzeichnet, dass** die Partikel (12) eine Korngröße d90 von weniger als 60 µm aufweisen.

5. Speicherelement nach einem der Ansprüche 1 bis 4, **dadurch gekennzeichnet, dass** die Partikel (12) bezüglich einer Vorzugsrichtung ausgerichtet sind.

6. Speicherelement nach einem der Ansprüche 1 bis 5, **dadurch gekennzeichnet, dass** die Partikel (12) aus Eisen und/oder einem Eisenoxid, insbesondere Eisenglimmer, bestehen.

7. Speicherelement nach einem der Ansprüche 1 bis 6, **dadurch gekennzeichnet, dass** die Matrix aus gesinterten Keramikpartikeln besteht.

8. Speicherelement nach Anspruch 7, **dadurch gekennzeichnet, dass** die Keramikpartikel eine mediane Korngröße d50 von weniger als 1 µm aufweisen.

9. Speicherelement nach Anspruch 7 oder 8, **dadurch gekennzeichnet, dass** die Keramikpartikel aus einem redox-inerten Material, insbesondere aus Al₂O₃, MgO oder ZrO₂, bestehen.

10. Verfahren zum Herstellen eines Speicherelements für eine Festelektrolyt-Batterie, bei welchem ein Schlicker (10) aus Keramikpartikeln und Partikeln (12) aus einem Metall und/oder einem Metalloxid, welche zusammen ein Redoxpaar bilden, bereitgestellt und zu einem Grünkörper geformt wird, welcher anschließend gesintert wird, **dadurch gekennzeichnet, dass** plättchenförmige Partikel (12) aus Metall und/oder Metalloxid verwendet werden.

11. Verfahren nach Anspruch 10, **dadurch gekennzeichnet, dass** der Grünkörper durch Extrusion oder Pressen geformt wird.

12. Verfahren nach Anspruch 10, **dadurch gekennzeichnet, dass** zum Formen des Grünkörpers zunächst durch Foliengießen eine Grünfolie (20) auf einem Träger (18) hergestellt wird, anschließender der Träger (18) abgezogen und eine Mehrzahl von Grünfolienabschnitten zum Grünkörper gestapelt und anschließend laminiert und entbindert wird.

13. Verfahren nach einem der Ansprüche 10 bis 12, **dadurch gekennzeichnet, dass** als Partikel (12) aus dem Metall und/oder Metalloxid Eisenglimmerpartikel mit einer medianen Korngröße d50 von 10-20 µm und einer Korngröße d90 von weniger als 60 µm sowie einem Aspektverhältnis von mehr als 10 verwendet werden.

14. Verfahren nach einem der Ansprüche 10 bis 12, **dadurch gekennzeichnet, dass** als Keramikpartikel Partikel aus Al₂O₃, MgO oder ZrO₂ mit einer medianen Korngröße d50 von weniger als 1 µm verwendet werden.

## Claims

1. Storage element for a solid electrolyte battery, comprising a main body made of a porous ceramic matrix in which particles (12) of a metal and/or a metal oxide which together form a redox pair are incorporated, **characterized in that** the particles (12) have a platelet-like form.

2. Storage element according to Claim 1, **characterized in that** the particles (12) have an aspect ratio of more than 10.

3. Storage element according to Claim 1 or 2, **characterized in that** the particles (12) have a median grain size d50 of 10-20 µm.

4. Storage element according to one of Claims 1 to 3, **characterized in that** the particles (12) have a grain size d90 of less than 60 µm.

5. Storage element according to one of Claims 1 to 4, **characterized in that** the particles (12) are oriented with respect to a preferential direction.

6. Storage element according to one of Claims 1 to 5, **characterized in that** the particles (12) consist of iron and/or an iron oxide, in particular micaceous iron oxide.

7. Storage element according to one of Claims 1 to 6, **characterized in that** the matrix consists of sintered ceramic particles.

8. Storage element according to Claim 7, **characterized in that** the ceramic particles have a median grain size d50 of less than 1 µm.

9. Storage element according to Claim 7 or 8, **characterized in that** the ceramic particles consist of a redox-inert material, in particular of Al₂O₃, MgO or ZrO₂.

10. Process for producing a storage element for a solid electrolyte battery, in which a slip (10) of ceramic particles and particles (12) of a metal and/or a metal oxide which together form a redox pair is provided and shaped to form a green body, which is subsequently sintered, **characterized in that** platelet-like particles (12) of metal and/or metal oxide are used.

11. Process according to Claim 10, **characterized in that** the green body is shaped by extrusion or pressing.

12. Process according to Claim 10, **characterized in that**, in order to shape the green body, firstly a green sheet (20) is produced on a support (18) by sheet casting, the support (18) is subsequently removed and a plurality of green sheet portions are stacked to form the green body and subsequently laminated and debindered.

13. Process according to one of Claims 10 to 12, **characterized in that** micaceous iron oxide particles having a median grain size d50 of 10-20 µm and a grain size d90 of less than 60 µm and also an aspect ratio of more than 10 are used as particles (12) of the metal and/or metal oxide.

14. Process according to one of Claims 10 to 12, **characterized in that** particles of Al₂O₃, MgO or ZrO₂ having a median grain size d50 of less than 1 µm are used as ceramic particles.

## Revendications

1. Elément accumulateur pour une batterie à électrolyte solide, avec un corps de base en une matrice céramique poreuse, dans laquelle sont incorporées des particules (12) en un métal et/ou un oxyde métallique, qui forment ensemble une paire redox, **caractérisé en ce que** les particules (12) sont réalisées en forme de plaquettes.

2. Elément accumulateur selon la revendication 1, **caractérisé en ce que** les particules (12) présentent un rapport d'aspect supérieur à 10.

3. Elément accumulateur selon la revendication 1 ou 2, **caractérisé en ce que** les particules (12) présentent une taille de grain médiane d50 de 10 à 20 µm.

4. Elément accumulateur selon l'une quelconque des revendications 1 à 3, **caractérisé en ce que** les particules (12) présentent une taille de grain d90 inférieure à 60 µm.

5. Elément accumulateur selon l'une quelconque des revendications 1 à 4, **caractérisé en ce que** les particules (12) sont orientées par rapport à une direction préférentielle.

6. Elément accumulateur selon l'une quelconque des revendications 1 à 5, **caractérisé en ce que** les particules (12) sont constituées de fer et/ou d'un oxyde de fer, en particulier de fer micacé.

7. Elément accumulateur selon l'une quelconque des revendications 1 à 6, **caractérisé en ce que** la matrice se compose de particules céramiques frittées.

8. Elément accumulateur selon la revendication 7, **caractérisé en ce que** les particules céramiques présentent une taille de grain médiane d50 inférieure à 1 µm.

9. Elément accumulateur selon la revendication 7 ou 8, **caractérisé en ce que** les particules céramiques sont constituées d'un matériau inerte au niveau redox, en particulier de Al₂O₃, de MgO ou de ZrO₂.

10. Procédé pour la fabrication d'un élément accumulateur pour une batterie à électrolyte solide, dans lequel une barbotine (10) composée de particules céramiques et de particules (12) en un métal et/ou un oxyde métallique, qui forment ensemble une paire redox est fournie et est formée en un corps vert, que l'on fritte ensuite, **caractérisé en ce que** des particules en forme de plaquettes (12) en métal et/ou en oxyde métallique sont utilisées.

11. Procédé selon la revendication 10, **caractérisé en ce que** le corps vert est formée par extrusion ou pressage.

12. Procédé selon la revendication 10, **caractérisé en ce que**, pour former le corps vert, un film vert (20) est d'abord produit par coulée en film sur un support (18), ensuite le support (18) est enlevé et une pluralité de coupons de film vert en un corps vert est empilé, puis laminé et délianté.

13. Procédé selon l'une quelconque des revendications 10 à 12, **caractérisé en ce que** l'on utilise comme particules (12) en métal et/ou en oxyde métallique des particules de fer micacé présentant une taille de grain médiane d50 de 10 à 20 µm et une taille de grain d90 inférieure à 60 µm ainsi qu'un rapport d'aspect supérieur à 10.

14. Procédé selon l'une quelconque des revendications 10 à 12, **caractérisé en ce que** l'on utilise comme particules céramiques des particules de Al₂O₃, de MgO ou de ZrO₂ présentant une taille de grain médiane d50 inférieure à 1 µm.
